(19) **Europäisches Patentamt / European Patent Office / Office européen des brevets**

(11) **EP 4 462 263 B1**

(12) **EUROPEAN PATENT SPECIFICATION**

(45) Date of publication and mention
of the grant of the patent:
**03.12.2025 Bulletin 2025/49**

(21) Application number: **24174215.4**

(22) Date of filing: **03.05.2024**

(51) International Patent Classification (IPC):
**G06F 12/02** (2006.01) **G06N 3/045** (2023.01)
**G06N 3/063** (2023.01)

(52) Cooperative Patent Classification (CPC):
**G06F 12/0207; G06N 3/045; G06N 3/063**

(54) **DATA CONVERSION METHOD AND APPARATUS, ELECTRONIC DEVICE, AND STORAGE MEDIUM**

DATENUMWANDLUNGSVERFAHREN UND -VORRICHTUNG, ELEKTRONISCHE VORRICHTUNG UND SPEICHERMEDIUM

PROCÉDÉ ET APPAREIL DE CONVERSION DE DONNÉES, DISPOSITIF ÉLECTRONIQUE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.05.2023 CN 202310514473**

(43) Date of publication of application:
**13.11.2024 Bulletin 2024/46**

(73) Proprietors:
• **Beijing Youzhuju Network Technology Co., Ltd.**
 **Beijing 101299 (CN)**
• **Lemon Inc.**
 **Grand Cayman, KY1-1205 (KY)**

(72) Inventors:
• **XU, Zhilin**
 **Beijing, 100028 (CN)**

• **BAI, Longfei**
 **Beijing, 100028 (CN)**
• **CHEN, Qi**
 **Beijing, 100028 (CN)**
• **CHEN, Yimin**
 **Los Angeles, 90066 (US)**
• **LU, Shan**
 **Los Angeles, 90066 (US)**
• **WANG, Jian**
 **Beijing, 100028 (CN)**

(74) Representative: **Marks & Clerk LLP**
 **15 Fetter Lane**
 **London EC4A 1BW (GB)**

(56) References cited:
**EP-A1- 4 109 350      US-A1- 2020 133 831
US-A1- 2021 182 077**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 462 263 B1

**Description**

CROSS-REFERENCE TO RELATED APPLICATION

The present application claims priority of the Chinese Patent Application No. 202310514473.2, filed on May 9, 2023.

TECHNICAL FIELD

Embodiments of the present disclosure relate to a data conversion method, a data conversion apparatus, an electronic device, and a storage medium.

BACKGROUND

The field of Artificial Intelligence Deep Learning involves a large number of operations such as Convolutional Neural Network (CNN) and Matrix Multiplication (Mat Mul), and the like. In current computing devices, data processing integrated circuits, such as co-processors, accelerators, etc., may execute programs to accomplish various functions of artificial intelligence operations. The accelerator for deep learning can be a configurable fixed-function hardware accelerator that can be used for training and inference operations in deep learning applications. It provides complete hardware acceleration for convolutional neural networks by exposing operations related to each convolutional layer (e.g., convolution, pooling, full connectivity, activation, aggregation, local response normalization, etc.).

SUMMARY

At least one embodiment of the present disclosure provides a data conversion method for converting dimensions of a first data combination, the first data combination includes at least one batch, dimensions of data to which each of the at least one batch corresponds includes a first dimension, a second dimension, and a third dimension, and the data conversion method includes: reading n elements in the first data combination according to a first-dimension direction to obtain a first processing group, a first element to an n-th element in the first processing group are arranged according to the first-dimension direction, and n is a positive integer; performing a transpose on the first dimension and the third dimension of the first processing group to obtain a second processing group, a first element to an n-th element in the second processing group are arranged in a third-dimension direction; writing the first element to the n-th element in the second processing group to a first storage.

At least one embodiment of the present disclosure also provides a data conversion apparatus for converting dimensions of a first data combination, the first data combination includes at least one batch, dimensions of data to which each of the at least one batch corresponds includes a first dimension, a second dimension, and a third dimension, and the data conversion apparatus includes: a read module, configured to read n elements in the first data combination according to a first-dimension direction to obtain a first processing group, a first element to an n-th element in the first processing group are arranged according to the first-dimension direction, and n is a positive integer; a transpose module, configured to perform a transpose on the first dimension and the third dimension of the first processing group to obtain a second processing group, a first element to an n-th element in the second processing group are arranged in a third-dimension direction; a write module, configured to write the first element to the n-th element in the second processing group to a first storage.

At least one embodiment of the present disclosure also provides a data conversion apparatus. The data conversion apparatus includes: a processor; and a memory including one or more computer program modules; the one or more computer program modules are stored in the memory and configured to be executed by the processor, the one or more computer program modules are configured to implement the data conversion method provided by any one of the embodiments of the present disclosure.

At least one embodiment of the present disclosure further provides an electronic device. The electronic device includes: the data conversion apparatus provided by any one of the embodiments of the present disclosure; and a data processing apparatus, configured to process the first data combination.

At least one embodiment of the present disclosure further provides a storage medium, on which non-transitory computer-readable instructions are stored, the non-transitory computer-readable instructions, when executed by a computer, implement the data conversion method provided by any one of the embodiments of the present disclosure.

BRIEF DESCRIPTION OF DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.

FIG. 1 is a schematic diagram of an example of dimensions of a data composition;
FIG. 2 is a schematic diagram of a data conversion apparatus;
FIG. 3 is an exemplary flowchart of a data conversion method according to at least one embodiment of the present disclosure;
FIG. 4 is a schematic diagram of an example of a data conversion method according to at least one embodiment of the present disclosure;
FIG. 5 is an exemplary flowchart of one example of step S120 in FIG. 3;
FIG. 6 is a schematic diagram of another example of the data conversion method according to at least one embodiment of the present disclosure;
FIG. 7 is a schematic block diagram of a data conversion apparatus according to at least one embodiment of the present disclosure;
FIG. 8 is a schematic block diagram of another data conversion apparatus according to at least one embodiment of the present disclosure;
FIG. 9 is a schematic block diagram of an electronic device according to at least one embodiment of the present disclosure;
FIG. 10 is a schematic block diagram of another electronic device according to at least one embodiment of the present disclosure; and
FIG. 11 is a schematic diagram of a storage medium according to at least one embodiment of the present disclosure.

DETAILED DESCRIPTION

In order to make objects, technical details and advantages of the embodiments of the invention apparent, the technical solutions of the embodiments will be described in a clearly and fully understandable way in connection with the drawings related to the embodiments of the invention. Apparently, the described embodiments are just a part but not all of the embodiments of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements, the objects or equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

The present disclosure is described below through several specific embodiments. To keep the following description of the embodiments of the present disclosure clear and concise, detailed descriptions of well-known functions and well-known components may be omitted. When any component of an embodiment of the present disclosure appears in more than one drawing, the component is denoted by the same reference numeral in each drawing.

Existing hardware configurations of various processors, such as co-processors, accelerators, etc., are implemented differently for convolutional neural networks, matrix multiplication operations, etc., resulting in different requirements for each hardware configuration regarding formats of data arrangement format. For example, for a convolutional neural network operation, a data combination to be processed has a plurality of dimensions, the data combination includes at least one batch, the data corresponding to each batch further includes a plurality of dimensions; for $A \times B$ matrix multiplication (both A and B matrices are two-dimensional data combinations), the data arrangement format in memory is usually row-major (height $\times$ width), while the ideal data arrangement format for hardware computing is row-major (height $\times$ width) for A matrix, and column-major (width $\times$ height) for B matrix.

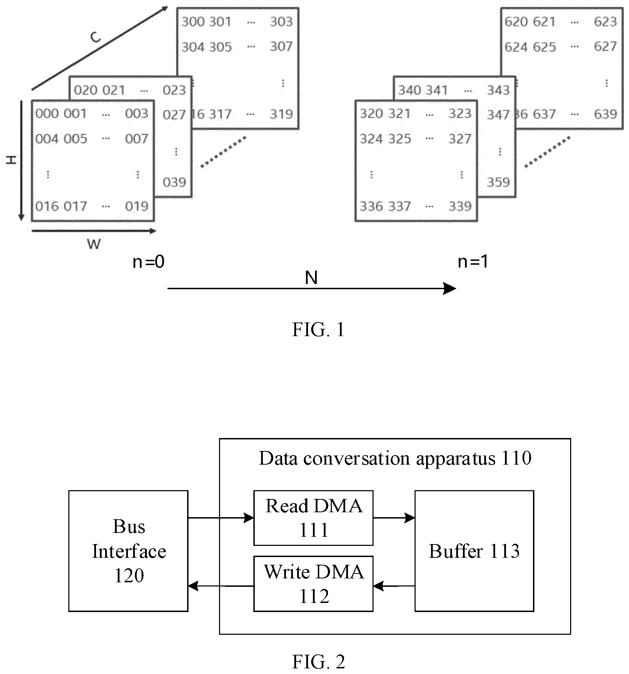

FIG. 1 is a schematic diagram of an example of dimensions of a data composition.

For example, as shown in FIG. 1, the data combination has a plurality of dimensions [N, C, H, W], the data combination includes at least one Batch, N represents the number of batches; the data corresponding to each batch includes a plurality of channels, C represents the number of channels. For example, in each channel, a plurality of data elements are arranged in two dimensions to form an array, the height of the data in each channel in the vertical dimension is H, H represents the number of data elements in the column direction of the array, and the width of the data in each channel in the horizontal dimension is W, W represents the number of data elements in the row direction of the array.

**EP 4 462 263 B1**

For example, the data combination in FIG. 1 includes 2 batches, i.e., the number of batches is N = 2; 16 channels are included in each batch, i.e., the number of channels in each batch is C = 16; the data element array in each channel has a number of data elements along the column direction of 5, i.e. a height H = 5; the data element array in each channel has a number of data elements along the row direction of 4, i.e. a width W = 4.

For example, the data combinations in different neural network frameworks have different data arrangement formats, i.e., the order to read or write the memory according to the dimension of the data combination is different when the data combination is processed. For example, data arrangement formats include NHWC, NCHW, and data arrangement formats private in some accelerators (e.g., NCHWC'), among others. For example, when data combinations are processed using some neural network accelerators, the data arrangement format needs to be converted using a data conversion module in the neural network accelerator.

FIG. 2 is a schematic diagram of a data conversion apparatus.

For example, as shown in FIG. 2, the data conversion apparatus 110 includes a buffer 113 and a direct memory access (DMA) controller (including a read DMA 111 and a write DMA 112) for reading and writing, respectively. For example, the data conversion apparatus 110 may be a module for data arrangement format conversion in a neural network accelerator, and the data conversion apparatus 110 is connected to other data processing apparatuses in the accelerator via a bus interface 120. For example, the bus interface 120 may be an Advanced eXtensible Interface (AXI), an AXI Coherence Extensions (ACE), or the like.

For example, the read DMA 111 reads a portion of the data to be processed from the memory into the buffer 113 via the bus interface 120, and after completing the rearrangement of the data in the buffer 113, the write DMA 112 writes the rearranged data into the memory via the bus interface 120. For example, the buffer 113 may be composed of a plurality of Static Random-Access Memories (SRAMs).

For example, the data conversion apparatus in the neural network accelerator only supports inter-conversion between a specific data arrangement format (e.g., NCHW) in a specific neural network framework (e.g., Pytorch framework) and a private data arrangement format (e.g., NCHWC'), and hardly supports conversion with data arrangement formats (e.g., NHWC) in other neural network frameworks (e.g., TensorFlow framework). Thus, for conversions between different data arrangement formats corresponding to different neural network frameworks (e.g., conversions between NCHW and NHWC, etc.), which typically requires corresponding data conversion tasks to be performed in processing device such as accelerator or the like, resulting in large latency in data conversion and increasing burdens on device such as accelerator or the like.

At least one embodiment of the present disclosure provides a data conversion method for converting a dimension of a first data combination. The first data combination includes at least one batch, and dimensions of data to which each of the at least one batch corresponds includes a first dimension, a second dimension, and a third dimension. The data conversion method includes: reading n elements in the first data combination according to a first-dimension direction to obtain a first processing group, a first element to an n-th element in the first processing group are arranged according to the first-dimension direction, and n is a positive integer; performing a transpose on the first dimension and the third dimension of the first processing group to obtain a second processing group, a first element to an n-th element in the second processing group are arranged in a third-dimension direction; writing the first element to the n-th element in the second processing group to a first storage.

At least one embodiment of the present disclosure further provides at least one data conversion apparatus, electronic device and storage medium.

The method, apparatus, device and storage medium provided by at least one embodiment of the present disclosure, support conversion between different data arrangement formats corresponding to different neural network frameworks, enable offloading corresponding data conversion tasks from processing device such as accelerator or the like, thereby reducing data conversion latency and reducing burdens on the device such as accelerator or the like.

Hereinafter, at least one embodiment of the present disclosure is described in detail with reference to the drawings. It should be noted that the same reference numerals in different drawings are used to refer to the same elements already described.

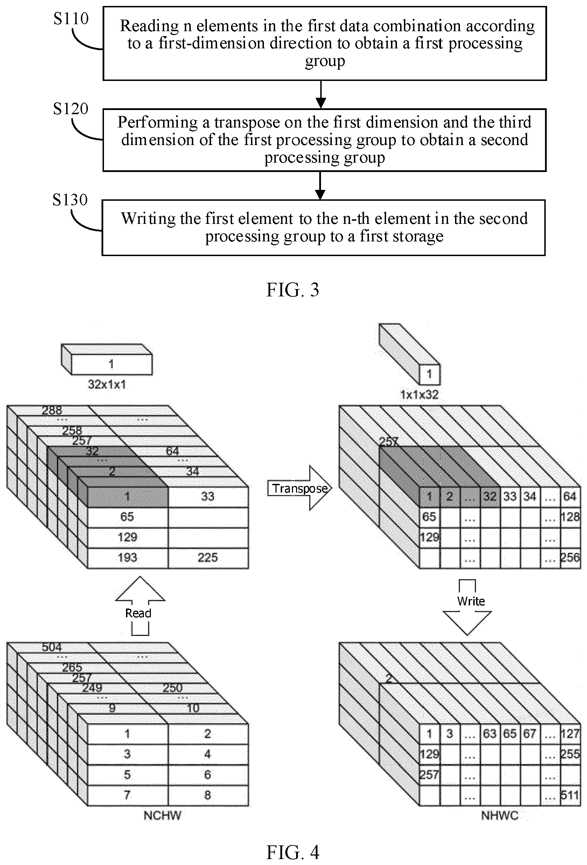

FIG. 3 is an exemplary flowchart of a data conversion method according to at least one embodiment of the present disclosure.

For example, as illustrated in FIG. 3, at least one embodiment of the present disclosure provides a data conversion method for converting a dimension of a first data combination. For example, the first data combination includes at least one batch, and dimensions of data to which each of the at least one batch corresponds includes a first dimension, a second dimension, and a third dimension. For example, the data conversion method includes the following steps S110 to S130.

Step S110: reading n elements in the first data combination according to a first-dimension direction to obtain a first processing group, where n is a positive integer;

Step S120: performing a transpose on the first dimension and the third dimension of the first processing group to obtain

EP 4 462 263 B1

a second processing group; and
Step S130: writing the first element to the n-th element in the second processing group to a first storage.

For example, the first dimension, the second dimension, and the third dimension are different from each other. In some examples, the first dimension may be a number of channels, the second dimension may be height, and the third dimension may be width. For example, the first data combination includes a number of batches N, data corresponding to each batch includes a plurality of channels, and the first dimension is a number of channels C. For example, in each channel, a plurality of elements are arranged in two dimensions to form an array (i.e., an H x W plane), the second dimension is the height H of the data in each channel in the vertical dimension (i.e., the number of elements of the array in the column direction), and the third dimension is the width W of the data in each channel in the horizontal dimension (i.e., the number of elements of the array in the row direction).

It should be noted that the first dimension, the second dimension and the third dimension are not limited to the above description, other selections can also be made according to the specific format and actual needs of the first data combination, which is not limited by the embodiments of the present disclosure.

In some examples, a plurality of elements in the first data combination are stored in the first storage in a first order, the first order is a prioritized order of a third-dimension direction, a second-dimension direction, a first-dimension direction, and a batch direction. For example, when the first dimension is the number of channels C, the second dimension is the height H, and the third dimension is the width W, the plurality of elements in the first data combination have a data arrangement format NCHW in the first storage.

For example, for a first data combination arranged in the first order as NCHW, in the first storage, starting with the starting element, the elements of the row in which the starting element is located are arranged in sequence in the W direction, and then moved in the H direction to the next row to sequentially arrange elements of that row in the W direction... After the elements in the H×W plane in which the starting element is located are arranged, if the plurality of elements in the first data combination are not all arranged, then moved in the C direction to the next H×W plane to sequentially arrange the plurality of elements in that H×W plane in the manner as previously described... After all the elements in the batch N located by a starting reading position are arranged, if the plurality of elements in the first data combination are not all arranged, then moved to the next batch in the N direction to sequentially arrange the elements in that batch in the manner as previously described.

It should be noted that the arrangement manner of the first data combination in the first storage is not limited to the above description, but may also be selected according to actual needs, which is not limited by the embodiments of the present disclosure.

For example, in step S110, when the n elements in the first data combination are read in the first-dimension direction, a starting reading position (e.g., a position where the starting element is located) is first determined, and then the n elements are sequentially read in the first-dimension direction (e.g., the C direction) starting from the starting reading position. For example, n elements that are read in the first-dimension direction may be taken as a first processing group, the 1st element to the n-th element in the first processing group is arranged in the first-dimension direction. For example, the first processing group may include only the first dimension, the second dimension and the third dimension, the first dimension may be the number of channels C, the second dimension may be the height H, and the third dimension may be the width W.

In some examples, a first dimension of the first processing group may be the number n of elements contained in the first processing group, a second dimension may be 1, and a third dimension may be the number m of sub-elements contained in each element, where m is a positive integer. That is, a first dimension of each element in the first processing group may be 1, a second dimension of each element in the first processing group may be 1, and a third dimension of each element in the first processing group may be m. In some examples, m = n.

For example, in step S120, when the first dimension of the first processing group is n, and the third dimension W is the number of sub-elements included in each element, the transpose is performed on the first dimension and the third dimension of the first processing group, and the resulting first dimension of the second processing group is the number m of sub-elements included in each element, and the resulting third dimension is the number n of elements included in the second processing group, that is, the first element to the n-th element in the second processing group are arranged in the third-dimension direction, and the first dimension and the third dimension of each element in the second processing group are also transposed compared to each element in the first processing group.

In some examples, a first dimension of the second processing group may be the number m of sub-elements contained in each element, a second dimension may be 1, a third dimension may be the number n of elements contained in the second processing group. That is, a first dimension of each element in the second processing group is m, a second dimension of each element in the second processing group is 1, and a third dimension of each element in the second processing group is 1. In some examples, m = n.

For example, in step S130, the n elements in the second processing group are written to corresponding storage positions in the first storage. In some examples, the n elements are stored in the same location in the first storage as they are arranged in the second processing group.

In some examples, the data conversion method may further include step S140.

Step S140: reading the first data combination a plurality of times to obtain a plurality of the first processing groups.

For example, in step S140, the first data combination may be read a plurality of times, and n elements may be read each time in the manner in step S110, to obtain the plurality of first processing groups. Each first processing group includes n elements arranged in a first dimension. In some examples, after the 1st first processing group is read, the 2nd first processing group may be read in the first order, and then the 3rd first processing group may be read in the first order until the first data combination is all read. For example, further, the transpose of the first dimension and the third dimension may be respectively performed on the plurality of first processing groups in the manner in step S120, to obtain a respectively corresponding plurality of second processing groups in which n elements arranged in the third-dimension direction are included in each of the second processing groups.

In some examples, the data conversion method may further include step S150.

Step S150: writing a plurality of the second processing groups to the first storage to obtain a second data combination.

For example, in step S150, the plurality of second processing groups may be written to the first storage in the manner in step S130 a plurality of times to obtain a second data combination. For example, when the first data combination is read a plurality of times in the manner in step S110, if all of the elements in the first data combination are all read, that is, all of the elements in the first data combination are included in the plurality of first processing groups, the transposed elements of all of the elements in the first data combination are included in the plurality of second processing groups in the manner in step S120. Therefore, after writing the plurality of second processing groups to the first storage, a number of elements included in the second data combination is identical to a number of elements included in the first data combination.

In some examples, the plurality of elements in the second data combination are stored in the first storage in a second order, and the second order is a prioritized order of the first-dimension direction, the third-dimension direction, a second-dimension direction, and a batch direction. For example, when the first dimension is the number of channels C, the second dimension is the height H, and the third dimension is the width W, the data arrangement format in the first storage of the plurality of elements in the second data combination is NHWC.

For example, for the second data combination arranged as NHWC in the second order, in the first storage, starting with the starting element, the elements of the row in which the starting element is located are sequentially arranged in the C direction, and then moved to the next row in the W direction to sequentially arrange elements of that row in the C direction... After the C×W plane in which the starting writing position is located is filled, if the plurality of elements in the second data combination are not yet arranged, then moved to the next C×W plane in the H direction to continue to sequentially arrange the plurality of elements in that C×W plane in the manner described above... After all the elements in the batch N in which the starting writing position are arranged, if the plurality of elements in the second data combination are not yet arranged, then moved to the next batch in the N direction to sequentially arrange the elements in that batch in the manner as previously described.

It should be noted that the arrangement of the second data combination in the first storage is not limited to the above description, but may also be selected according to actual needs, which is not limited by the embodiments of the present disclosure.

In some examples, the data arrangement format of the first data combination is NCHW, and the obtained data arrangement format of the second data combination is NHWC through the conversion of steps S110-S150. In other examples, the data arrangement format of the first data combination and the data arrangement format of the converted second data combination may also be of other types, which may be selected according to actual needs, which is not limited by the embodiments of the present disclosure.

For example, the data conversion method as shown in FIG. 3 may be implemented by, for example, the data conversion apparatus 110 shown in FIG. 2. For example, a first data combination to be read may be stored in the first storage (e.g. a memory); in step S110, the read DMA 111 reads n elements in the first data combination from the first storage into the buffer 113 via the bus interface 120 to obtain a first processing group; in step S120, the second storage (e.g., buffer 113 in FIG. 2) performs the transpose on the first dimension and the third dimension of the first processing group to obtain the second processing group; in step S130, the write DMA 112 writes the first element to the n-th element in the second processing group to the first storage through the bus interface 120.

For example, further, the data conversion apparatus 110 shown in FIG. 2 may also implement step S140 and step S150; in step S140, the read DMA 111 may read the first data combination stored in the first storage a plurality of times, and read n elements in the first data combination from the first storage into the buffer 113 a plurality of times to obtain the plurality of first processing groups; in step S150, the write DMA 112 writes the plurality of second processing groups to the first storage, thereby obtaining a converted second data combination.

It should be noted that the first storage is a memory and the second storage is a buffer (e.g., a ping-pong buffer including two buffer units for alternately reading and writing, respectively), and the first storage and the second storage may also be selected from other types according to actual circumstances, which is not limited by the embodiments of the present disclosure.

It should be noted that other types of apparatuses or devices may be adopted to perform the data conversion method provided by at least one embodiment of the present disclosure in addition to adopting the data conversion apparatus 110 shown in FIG. 2, and specifically may be selected according to actual needs, which is not limited by the embodiments of the present disclosure.

FIG. 4 is a schematic diagram of an example of a data conversion method according to at least one embodiment of the present disclosure. For example, FIG. 4 is a specific example of the data conversion method of FIG. 3.

For example, the first data combination is as shown in the lower left of FIG. 4, and the first data combination to be read is, for example, stored in a first storage (e.g., memory). The first data combination includes a number of batches N, data corresponding to each batch includes a plurality of channels, the first dimension is a number of channels C. In each channel, a plurality of elements are arranged in two dimensions to form an array (i.e., an H×W plane), the second dimension is the height H of the data in each channel in the vertical dimension (i.e., the number of elements of the array in the column direction), and the third dimension is the width W of the data in each channel in the horizontal dimension (i.e., the number of elements of the array in the row direction). For example, in the example of FIG. 4, N = 1, C = 64, H = 4, W = 2.

For example, as shown in the lower left of FIG. 4, 512 elements are included in the first data combination, and the number on each element indicates the storage position of that element in the first storage, that is, the 512 elements in the first data combination have a data arrangement format of NCHW in the first storage. For example, specifically, in a prioritized arrangement order of the third dimension W direction, the second dimension H direction, the first dimension C direction, and the batch N direction (i.e., the first order), starting with the starting element (i.e., storage position 1), the elements of the row in which the starting element is located (i.e., storage position 1, storage position 2) are sequentially arranged in the W direction, and then moved in the H direction to the next row to sequentially arrange elements of that row in the W direction (i.e., storage position 3, storage position 4)... After the elements in the H×W plane in which the starting element is located (i.e., storage position 1 to storage position 8) are arranged, then moved in the C direction to the next H×W plane to arrange a plurality of elements in that array (i.e., storage position 9 to storage position 16) in the aforementioned manner... until 512 elements are all arranged.

For example, as shown in FIG. 4, the number of sub-elements contained in each element is 32 (i.e., m = 32), and a plurality of sub-elements are arranged in a third-dimension W' direction; that is, each element has a first dimension C' and a second dimension H' of 1 and a third dimension W' of 32 (i.e., C' × H' × W' = = 1 × 1 × 32).

For example, according to step S110 of FIG. 3, 32 elements in the first data combination (i.e. n = 32) may be read in the first-dimension direction C, i.e. storage positions 1, 9, 17... 249 in the first storage are read sequentially as shown in FIG. 4. For example, 32 elements (i.e., element 1 to element 32) that are read in the first order may be taken as the first processing group; the first processing group is shown in the upper left of FIG. 4 (i.e., the shaded portion), the first element to the 32nd element in the first processing group are arranged in the first-dimension direction C. For example, a first processing group as shown in FIG. 4 may include only a first dimension C1, a second dimension H1, and a third dimension W1, and the first dimension C1 of the first processing group may be the number of elements 32 contained by the first processing group (i.e., n = 32), the second dimension H1 may be 1, and the third dimension W1 may be the number of sub-elements 32 contained in each element (i.e., m = 32), i.e., C1 × H1 × W1 = 32 × 1 × 32. For example, as shown in FIG. 4, the first processing group includes a number n = 32 of elements, and a number m = 32 of sub-elements contained in each element, i.e., m = n.

For example, according to step S120 of FIG. 3, a transpose is performed on the first dimension C1 and the third dimension W1 of the first processing group to obtain the second processing group. For example, the second processing group is as shown in the upper right of FIG. 4 (i.e., the shaded portion), the first element to the 32nd element in the second processing group are arranged in the third-dimension direction W, and the first dimension C2 of the second processing group is the number 32 of sub-elements included in each element (i.e., m = 32), the second dimension H2 may be 1, and the third dimension W2 is the number 32 of elements included in the second processing group (i.e., n = 32), i.e., C2 × H2 × W2 = 32 × 1 × 32.

For example, as shown in FIG. 4, the first dimension C" of each element in the second processing group is 32, the second dimension H" and the third dimension W" are each 1 (i.e., C" × H" × W" = 32 × 1 × 1), that is, the first dimension C" and the third dimension W" of each element in the second processing group are also transposed as compared to the first dimension C' and the third dimension W' of each element in the first processing group.

For example, according to step S130 of FIG. 3, the first element to the 32nd element in the second processing group are written to corresponding storage positions in the first storage; the resulting second data combination after writing the plurality of second processing groups to the first storage is shown in bottom right of FIG. 4, and the number on each element of the second data combination indicates the storage position of that element in the first storage. Specifically, as shown in FIG. 4, according to step S130 of FIG. 3, the 32 elements are sequentially written to the storage positions 1, 3, 5, 7... 63 in the first storage, that is, the storage positions of the 32 elements in the first storage are the same as the arrangement locations in the second processing group.

For example, as shown in the upper left of FIG. 4, after converting elements 1 to 32 of the first data combination according to steps S110-S130 of FIG. 3, according to step S140, conversion may continue to be performed on the next group of elements (i.e., elements 33 to 64) in the manner of steps S110-S130 of FIG. 3 until all elements in the first data combination are converted to obtain a converted second data combination as shown in the lower right of FIG. 4.

For example, specifically, in step S140, the first data combination may be read a plurality of times as in step S110, after the 1st first processing group is read, the 2nd first processing group may be read in the first order, and then the 3rd first processing group may be read in the first order... until the first data combination is read; 32 elements are read at a time to obtain 16 first processing groups, and each first processing group includes 32 elements arranged in the first-dimension direction C.

For example, further, the transpose of the first dimension and the third dimension may be respectively performed in the manner of step S120 on the 32 first processing groups to obtain respectively corresponding 32 second processing groups in which each of the second processing groups includes 32 elements arranged in the third-dimension direction W.

For example, further, in step S150, a plurality of second processing groups may be written to the first storage in the manner of step S130 a plurality of times to obtain a second data combination. For example, as shown in the bottom right of FIG. 4, the obtained number of elements included in the second data combination is identical to the number of elements included in the first data combination.

For example, as shown in FIG. 4, the data arrangement format of the first data combination in the first storage is NCHW, and the data arrangement format of the obtained second data combination in the first storage is NHWC through the conversion of steps S110 to S150.

For example, as shown in the bottom right of FIG. 4, in the first storage, for the second data combination in the NHWC format, in a prioritized order (i.e., the second order) of the first dimension C direction, the second dimension W direction, the third dimension H direction, and the batch N direction, starting with the starting element (i.e., storage position 1), the elements of the row in which the starting element is located are sequentially arranged in the C direction (i.e., storage position 1, storage position 2), and then moved in the W direction to the next row to sequentially arrange elements of that row in the C direction (i.e., storage position 3, storage position 4)... After the C×W plane in which the starting writing location is located (i.e., storage position 1 to storage position 128) is filled, then moved in the H direction to the next C×W plane to sequentially arrange a plurality of elements (i.e., storage positions 129 through 256) in that C×W plane in the aforementioned manner,... until 512 elements are all arranged.

For example, as shown in the example of FIG. 4, each time a request is made to read 32 elements in the first data combination, the read address RD_addr of the request may be represented by equation (1) as follow:

$$RD\_addr = datain\_addr + C \times IN\_PLANAR\_STRIDE + H \times IN\_LINE\_STRIDE + W \times 2 \qquad (1)$$

Where datain_addr represents the starting address of the data that is requested to be read (e.g., the address of element 1 at the bottom left of FIG. 4), IN_PLANAR_STRIDE represents the interval in the first storage of each H×W plane in the C direction, and IN_LINE_STRIDE represents the interval in the first storage of each line of data in the W direction. For example, as shown in equation (1), the read address RD_addr is equal to the sum of the starting address datain_addr, the product of C and the H×W planar-stride, the product of H and the W-direction line-stride, and the product of W and the space occupied by each element (e.g., 2 bytes for intl6 data precision).

For example, as shown in the example of FIG. 4, each time a request is made to write 32 elements in the second processing group to the first storage, the write address WR_addr of the request may be represented by equation (2) as follow:

$$WR\_addr = dataout\_addr + W \times OUT\_PLANAR\_STRIDE + H \times OUT\_LINE\_STRIDE + C \times 2 \quad (2)$$

Where, dataout_addr represents the starting address of data requested to be written (e.g., the address of element 1 at the bottom right of FIG. 4), OUT_PLANAR_STRIDE represents the interval of each H×C plane in the first storage in the W direction, and OUT_LINE_STRIDE represents the interval of each line of data in the first storage in the C direction. For example, as shown in equation (2), the write address WR_addr is equal to the sum of the starting address dataout_addr, the product of W and the H×C planar-stride, the product of H and the C-direction line-stride, and the product of C and the space occupied by each element (e.g., 2 bytes for intl6 data precision).

It is to be noted that the example shown in FIG. 4 takes a data precision of intl6 as an example, and the data conversion method provided by the embodiments of the present disclosure can also be used for other data precisions (e.g., int8, fp64, fp32, fpl6, etc.) according to actual needs, which is not limited by the embodiments of the present disclosure.

The data conversion method provided by at least one embodiment of the present disclosure supports conversion between different data arrangement formats corresponding to different neural network frameworks (i.e., conversion between dimensions of the first data composition), enables offloading corresponding data conversion tasks from processing device such as accelerator or the like, thereby reducing data conversion latency and reducing burdens on the device such as accelerator or the like.

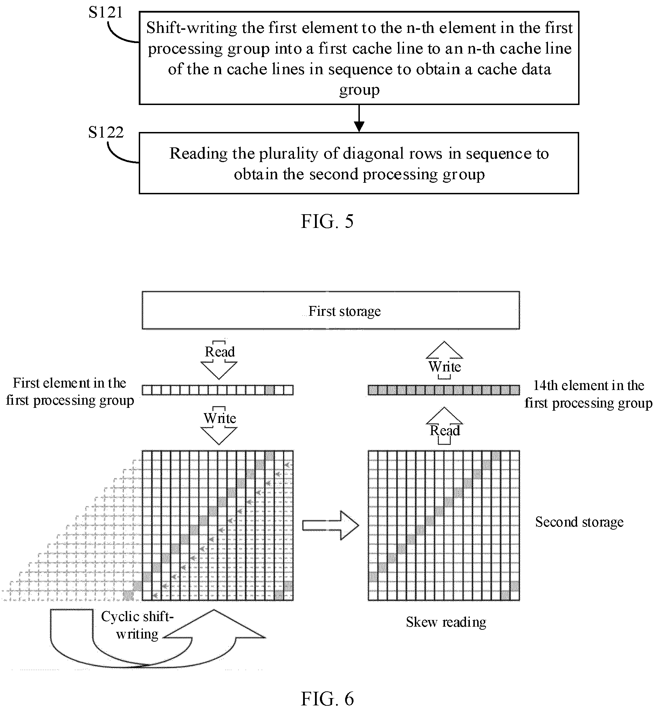

FIG. 5 is an exemplary flowchart of one example of step S120 in FIG. 3.

For example, in step S120, the first processing group is written to a second storage, the second storage includes n cache lines. As shown in FIG. 5, in order to perform the transpose on the first dimension and the third dimension of the first processing group, the step S120 in FIG. 3 may include the following steps S121 to S122.

Step S121: shift-writing the first element to the n-th element in the first processing group to a first cache line to an n-th cache line of the n cache lines in sequence to obtain a cache data group, the cache data group includes a plurality of diagonal rows.

Step S122: reading the plurality of diagonal rows in sequence to obtain the second processing group.

For example, in step S121, assuming that the number of elements included in the first processing group is n, and the number of sub-elements included in each element is m, the first processing group has a first dimension n, a second dimension 1, and a third dimension m. For example, the $n \times m$ sub-elements in the first processing group are written to n cache lines in rows, each cache line including m columns, and the $n \times m$ sub-elements that have been written to the second storage are two-dimensionally arranged to form an sub-element array of n rows and m columns as the cache data group. For example, when m = n, the cache data group includes 2n-1 diagonal rows.

For example, in step S121, assuming that each element in the first processing group includes n sub-elements (i.e., m = n), first, n sub-elements of the first element in the first processing group are written to the first cache line of the n cache lines, and a first sub-element to an n-th sub-element of the first element are written to a first column to an n-th column of the first cache line in sequence; then, n sub-elements of a k-th element in the first processing group are written to a k-th cache line of the n cache lines, a k-th sub-element to an n-th sub-element of the k-th element are written to a first column to a (n-k+l)-th column of the k-th cache line, and the first sub-element to a (k-l)-th sub-element of the k-th element are written to a (n-k+2)-th column to a n-th column of the k-th cache line, where k = 2, 3,..., n-l; finally, the n sub-elements of the n-th element in the first processing group are written to the n-th cache line of the n cache line, an n-th sub-element of the n-th element is written to a first column of the n-th cache line, and a first sub-element to a (n- l)-th sub-element of the n-th element are written to a second column to an n-th column of the n-th cache line. For example, through the above process, the cache data group may be obtained, and the cache data group includes $n \times n$ sub-elements of n rows and n columns, the plurality of diagonal rows of the cache data group includes a first diagonal row to a (2n-l)-th diagonal row.

For example, in step S122, also assuming that each element in the first processing group includes n sub-elements (i.e. m = n), first, k sub-elements in a k-th diagonal row of the plurality of diagonal rows and n-k sub-elements in an (n+k)-th diagonal row of the plurality of diagonal rows are read as a k-th element in the second processing group, where k = 1, 2,..., n-1; then, n sub-elements in an n-th diagonal row of the plurality of diagonal rows are read as an n-th element in the second processing group. For example, by the above process, the second processing group is obtained, the second processing group has a first dimension of m, a second dimension of 1, and a third dimension of n.

For example, since the the first element to the n-th element in the first processing group are arranged in the first-dimension direction, and accordingly the first sub-element to the m-th sub-element of each element are arranged in the third-dimension direction, the process of sequentially shift-writing the n elements in the first processing group to the n cache lines is the process of sequentially shift-writing these n elements to the n cache lines in the first-dimension direction, and the process of sequentially reading the plurality of diagonal rows is the process of reading in the third-dimension direction to obtain the n elements in the second processing group. Thus, the first element to n-th element of the second processing group obtained by reading are arranged in the third-dimension direction, and the first sub-element to m-th sub-element of each element are arranged in the first-dimension direction, that is, the first dimension and third dimension of the second processing group are transposed compared to the first processing group.

FIG. 6 is a schematic diagram of another example of the data conversion method according to at least one embodiment of the present disclosure. For example, FIG. 6 is one specific example of the data conversion method as shown in FIG. 3 or FIG. 5.

For example, as shown in FIG. 6, the first data combination is stored in the first storage, in step S110 of FIG. 3, the first element to the n-th element in the first data combination are read out in the first order as the first processing group, and n elements in the first processing group are written to the second storage, respectively. In step S120 of FIG. 3, the second storage performs a transpose on the first dimension and the third dimension of the first processing group to obtain the second processing group, for example, the first dimension of the first processing group is the number of channels C1, the third dimension of the first processing group is the width W1. After the processing of step S120, the first dimension C2 and the third dimension W2 of the second processing group are transposed compared to the first dimension C1 and the third dimension W1 of the first processing group (i.e., C1W1 = > W2C2). In step S130 of FIG. 3, the first element to the n-th element in the second processing group are written to the first storage in the second order.

For example, in the example of FIG. 6, the first storage may be a memory and the second storage may be a buffer (e.g., a ping-pong buffer). For example, as shown in FIG. 6, the second storage may be formed of a plurality of SRAMs, each column of the second storage is a SRAM, which can independently control read and write addresses for each of its locations. Since the space occupied by the SRAM is small, the SRAM is more suitable for format conversion of large-scale data compared to registers with large area overhead, thereby saving space and improving data conversion efficiency.

For example, since for each SRAM, only one sub-element in its location can be read at a time, the sub-elements in each column of the second storage (i.e., the sub-elements in all locations of one SRAM) cannot be read simultaneously. Thus, the transpose between rows and columns can be accomplished in the manner of a cyclic shift-writing and a skew reading, of which steps S121-S122 in FIG. 5 are one example. The addresses of the sub-elements in each cache line are the same for writing in rows, and the addresses of the sub-elements in the diagonal rows are different for the skew reading.

For example, as shown in FIG. 6, the plurality of elements in the first processing group complete the transpose of the first dimension and the third dimension by way of cyclic shift-writing and skew reading. For example, in the example of FIG. 6, the first processing group includes a number of elements of 16 (i.e., n = 16), the number of sub-elements contained in each element is also 16 (m = 16), that is, the first processing group contains $16 \times 16$ sub-elements, and the first processing group has the first dimension C1 = 16, the second dimension H1 = 1, and the third dimension W1 = 16.

For example, as shown in FIG. 6, according to step S121 of FIG. 5, the first element to the 16th element in the first processing group are sequentially shift-written to the first cache line to the 16th cache line to obtain the cache data group; that is, the $16 \times 16$ sub-elements in the first processing group are written to 16 cache lines of the second storage in rows, each row is shifted by an additional length of 1 sub-element than the previous row. For example, each cache line includes 16 columns, and the $16 \times 16$ sub-elements after writing to the second storage are two-dimensionally arranged to form an array of 16 rows and 16 columns of sub-elements as a cache data group that includes 31 diagonal rows. For example, further, in accordance with step S122 of FIG. 5, 31 diagonal rows are sequentially read to obtain a second processing group.

For example, as shown in FIG. 6, according to step S121 of FIG. 5, the specific process of cyclic shift-writing is:

(1) for the first element in the first processing group (e.g., the first element is the example element read from the first storage in FIG. 6, and the first cache line is shown as the first row of the second storage on the left side of FIG. 6), writing its 16 sub-elements in sequence to the first column to the 16th column of the first cache line, i.e., without shifting when writing the first element;

(2) for the k-th element in the first processing group (the k-th cache line is shown as the k-th row of the second storage on the left of FIG. 6), where k = 2, 3,..., 15, writing its k-th sub-element to 16-th sub-element in sequence to the first column to the (17-k)-th column, and writing its first sub-element to (k-l)-th sub-element to the (18-k)-th column to the 16th column of the k-th cache line (taking the 3-th element in the first processing group as an example, writing its 3-th sub-element to 16-th sub-element in sequence to the first column to the 14th column, and writing its first sub-element to the second sub-element to the 15th column to the 16th column of the 3-th cache line);

(3) for the 16th element in the first processing group (the 16th cache line is shown as the last row of the second storage on the left of FIG. 6), its 16th sub-element is written to the first column of the 16th cache line, and its first sub-element to the 15th sub-element are written to the second column to the 16th column of the 16th cache line.

For example, as shown in FIG. 6, the above process is equivalent to shifting the sub-elements of the dotted line portion on the left side of each row of the second storage to the position indicated by the arrow on the right side. For example, the cache data group obtained by the above process is shown in the solid line portion of the second storage in FIG. 6, the cache data group includes 16 rows and 16 columns of $16 \times 16$ sub-elements, and the plurality of diagonal rows of the cache data group includes a first diagonal row to a 31st diagonal row.

For example, as shown in FIG. 6, according to step S122 of FIG. 5, an exemplary specific process of skew reading is:

(1) reading k sub-elements in the k-th diagonal row and 16-k sub-elements in the (16+k)-th diagonal row as the k-th element in the second processing group, where k = 1, 2,..., 15 (taking the sub-elements marked in the shaded region in the second storage on the right side of FIG. 6 as an example, reading 14 sub-elements in the 14th diagonal row and 2 sub-elements in the 30th diagonal row as the 14th element in the second processing group);

(2) reading the 16 sub-elements in the 16th diagonal row as the 16th element in the second processing group.

For example, through the above process, the transposed second processing group is obtained. For example, after the 16 elements in the first processing group are sequentially shift-written to 16 cache lines, the addresses of the sub-elements in each cache line are the same, while the addresses of the sub-elements in the diagonal rows are different for the skew reading. For example, since the first element to the 16th element in the first processing group are arranged in the first-dimension direction, and accordingly the first sub-element to the 16th sub-element in each element are arranged in the third-dimension direction, the first element to the 16th element in the second processing group obtained by reading are arranged in the third-dimension direction and the first sub-element to the 16th sub-element in each element are arranged in the first-dimension direction based on the address correspondence of the written and read sub-elements. Thus, the first dimension and the third dimension of the second processing group are transposed as compared to the first processing group.

In the data conversion method provided by the embodiments of the present disclosure, the embodiment as shown in FIG. 5 or FIG. 6 can not only be used to complete step S120 of FIG. 3, but can also be used for other application scenarios where data transpose of two-dimensional arrangement needs to be performed. Accordingly, the data conversion method provided by at least one embodiment of the present disclosure, in addition to supporting conversion between different data arrangement formats corresponding to different neural network frameworks (e.g., NCHW = > NHWC), may also be used to implement a transpose of two-dimensionally arranged data, which can further be used for a transpose of row-major order and column-major order in matrix multiplication operations (e.g., height × width = > width × height) or other application scenarios, which are not limited by embodiments of the present disclosure.

It should be noted that the data arrangement format (type or arrangement of dimensions), the number of the included elements, and the corresponding conversion manner, etc. of the data of the first data combination, the first processing group, the second processing group, and the second data combination described in FIG. 3 to FIG. 6 are merely exemplary, and other arrangements or corresponding conversion manners, etc. may be selected according to actual needs, which are not limited by the embodiments of the present disclosure.

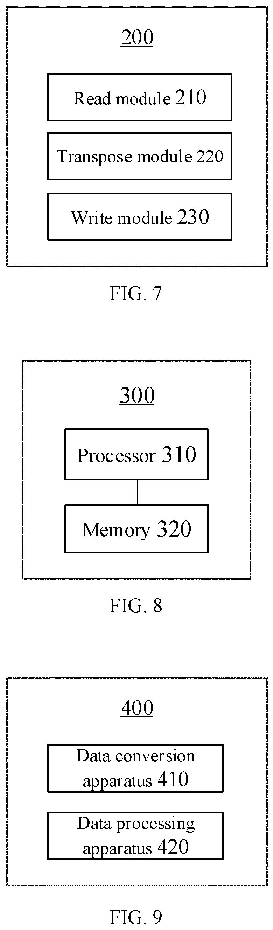

FIG. 7 is a schematic block diagram of a data conversion apparatus according to at least one embodiment of the present disclosure.

For example, as shown in FIG. 7, the data conversion apparatus 200 is configured to convert dimensions of a first data combination. For example, the data conversion apparatus 200 includes a read module 210, a transpose module 220, and a write module 230. For example, the first data combination includes at least one batch, dimensions of data to which each of the at least one batch corresponds includes a first dimension, a second dimension, and a third dimension. In some examples, the first dimension is a number of channels, the second dimension is height, and the third dimension is width.

For example, the read module 210 is configured to read n elements in the first data combination according to a first-dimension direction to obtain a first processing group. For example, a first element to an n-th element in the first processing group are arranged according to the first-dimension direction, and n is a positive integer. That is, the read module 210 may be configured to perform, for example, step S110 as shown in FIG. 3.

For example, the transpose module 220 is configured to perform a transpose on the first dimension and the third dimension of the first processing group to obtain a second processing group. For example, a first element to an n-th element in the second processing group are arranged in a third-dimension direction. That is, the transpose module 220 may be configured to perform, for example, step S120 as shown in FIG. 3.

For example, the write module 230 is configured to write the first element to the n-th element in the second processing group to a first storage. That is, the write module 230 may be configured to perform, for example, step S130 as shown in FIG. 3.

For example, the read module 210 is further configured to read the first data combination a plurality of times to obtain a plurality of the first processing groups. That is, the read module 210 may be configured to perform step S140.

For example, the write module 230 is further configured to write a plurality of the second processing groups to the first storage to obtain a second data combination. For example, a number of elements included in the second data combination is identical to a number of elements included in the first data combination. That is, the write module 230 may be configured to perform step S150.

In some examples, a plurality of elements in the first data combination are stored in the first storage in a first order, the first order is a prioritized order of the third-dimension direction, a second-dimension direction, the first-dimension direction, and a batch direction. In some examples, a plurality of elements in the second data combination are stored in the first storage in a second order, and the second order is a prioritized order of the first-dimension direction, the third-dimension direction, the second-dimension direction, and the batch direction.

In some examples, a first dimension of each element in the first processing group is 1, a second dimension of each element in the first processing group is 1, and a third dimension of each element in the first processing group is m; a first dimension of each element in the second processing group is m, a second dimension of each element in the second processing group is 1, a third dimension of each element in the second processing group is 1, where m is a positive integer. In some examples, m = n.

In some examples, the first processing group is written to a second storage, the second storage includes n cache lines. For example, the transpose module 220 may be further configured to: shift-write the first element to the n-th element in the first processing group to a first cache line to an n-th cache line of the n cache lines in sequence to obtain a cache data group, the cache data group includes a plurality of diagonal rows; and read the plurality of diagonal rows in sequence to obtain the second processing group. In some examples, the first storage is a memory, and the second storage is a buffer.

In some examples, each element in the first processing group includes n sub-elements. The transpose module 220 may be further configured to: write n sub-elements of the first element in the first processing group to the first cache line of the n cache lines, wherein a first sub-element to an n-th sub-element of the first element are written to a first column to an n-th column of the first cache line in sequence; write n sub-elements of a k-th element in the first processing group to a k-th cache line of the n cache lines, wherein a k-th sub-element to an n-th sub-element of the k-th element are written to a first column to a (n-k+l)-th column of the k-th cache line, and the first sub-element to a (k-l)-th sub-element of the k-th element are written to a (n-k+2)-th column to a n-th column of the k-th cache line, and k = 2, 3, ..., n-1; and write n sub-elements of the n-th element in the first processing group to the n-th cache line of the n cache line, wherein an n-th sub-element of the n-th element is written to a first column of the n-th cache line, and a first sub-element to a (n-l)-th sub-element of the n-th element are written to a second column to an n-th column of the n-th cache line.

In some examples, each element in the second processing group includes n sub-elements, and the cache data group includes $n \times n$ sub-elements of n rows and n columns, the plurality of diagonal rows includes a first diagonal row to a (2n-1)-th diagonal row. The transpose module 220 may be further configured to: read k sub-elements in a k-th diagonal row of the plurality of diagonal rows and n-k sub-elements in an (n+k)-th diagonal row of the plurality of diagonal rows as a k-th element in the second processing group, where k = 1, 2,..., n-1; and read n sub-elements in an n-th diagonal row of the plurality of diagonal rows as an n-th element in the second processing group.

Since details of what is involved in the operation of the above-described data conversion apparatus 200 are described in the above description of a data conversion method such as that shown in FIG. 3, which are not repeated here for the sake of brevity, and reference are made to the above description with respect to FIG. 1 to FIG. 6 for the relevant details.

It should be noted that the respective modules described above in the data conversion apparatus 200 shown in FIG. 7 may be configured as software, hardware, firmware, or any combination of the above that executes specific functions, respectively. For example, the modules may correspond to a special purpose integrated circuit, or may also correspond to a pure software code, or may also correspond to circuits combining software and hardware. As an example, the apparatus described with reference to FIG. 7 may be a PC computer, a tablet apparatus, a personal digital assistant, a smart phone, a web application or other apparatus capable of executing program instructions, but is not limited thereto.

In addition, although the data conversion apparatus 200 is divided into modules respectively configured to execute corresponding processing when described above, it is clear to those skilled in the art that the processing executed by respective modules may also be executed without any specific division of modules in the apparatus or any clear demarcation between the respective modules. In addition, the data conversion apparatus 200 as described above with reference to FIG. 7 is not limited to including the above-described modules, but may also have some other modules (e.g., a storage module, a control module, etc.) added as required, or may also have the above-described modules combined.

At least one embodiment of the present disclosure further provides another data conversion apparatus, the data conversion apparatus includes a processor and a memory; the memory includes computer programs; the computer programs are stored in the memory and configured to be executed by the processor; and the computer programs are used to implement the data conversion method provided by the embodiments of the present disclosure as described above.

FIG. 8 is a schematic block diagram of another data conversion apparatus according to at least one embodiment of the present disclosure.

For example, as shown in FIG. 8, the data conversion apparatus 300 includes a processor 310 and a memory 320. For example, memory 320 is configured to store non-transitory computer-readable instructions (e.g., one or more computer program modules). The processor 310 is configured to execute non-transitory computer-readable instructions; and when executed by the processor 310, the non-transitory computer-readable instructions may implement one or more steps of the data conversion method as described above. The memory 320 and the processor 310 may be interconnected by a bus system and/or other form of connection mechanism (not shown).

For example, the processor 310 may be a digital signal processor (DSP) or other form of processing unit with data conversion capability and/or program execution capability, such as an X86, an ARM architecture, a Field Programmable Gate Array (FPGA) or the like. The processor 310 may be a general-purpose processor or a special purpose processor, and may control other components in the data conversion apparatus 300 to perform the desired functions.

For example, memory 320 may include any combination of one or more computer program products; and the computer program products may include various forms of computer readable storage media, for example, a volatile memory and/or a non-volatile memory. The volatile memory may include, for example, a Random-Access Memory (RAM) and/or a cache, or the like. The non-volatile memory may include, for example, a Read Only Memory (ROM), a hard disk, an Erasable Programmable Read Only Memory (EPROM), a Portable Compact Disk Read Only Memory (CD-ROM), a USB memory, a flash memory, or the like. One or more computer program modules may be stored on the computer readable storage medium, and the processor 310 may run the computer programs, to implement various functions of the data conversion apparatus 300. Various applications and various data, as well as various data used and/or generated by the applications may also be stored on the computer readable storage medium.

It should be noted that specific functions and technical effects of the data conversion apparatus 300 in the embodiments of the present disclosure may refer to the above description of the data conversion method provided by at least one embodiment of the present disclosure, which are not repeated here.

At least one embodiment of the present disclosure further provides an electronic device including a data processing apparatus and the data conversion apparatus provided by any one of the embodiments of the present

EP 4 462 263 B1

disclosure.

FIG. 9 is a schematic block diagram of an electronic device according to at least one embodiment of the present disclosure.

For example, as shown in FIG. 9, the electronic device 400 includes a data conversion apparatus 410 and a data processing apparatus 420. For example, the electronic device 400 may be a neural network accelerator or other AI accelerator, and may be any device such as a cell phone, a tablet computer, a notebook, an electronic book, a game console, a television, a digital photo frame, a navigator, etc., and may also be any combination of electronic devices and hardware, which are not limited by embodiments of the present disclosure.

For example, the data conversion apparatus 410 is, for example, the data conversion apparatus provided by any one of the embodiments of the present disclosure, and the data processing apparatus 420 may be a module in a neural network accelerator for data processing (e.g., data transmission, convolution calculation, etc.), including, but not limited to, a processor, a controller, a memory, a bus, or other electronic apparatus for data processing.

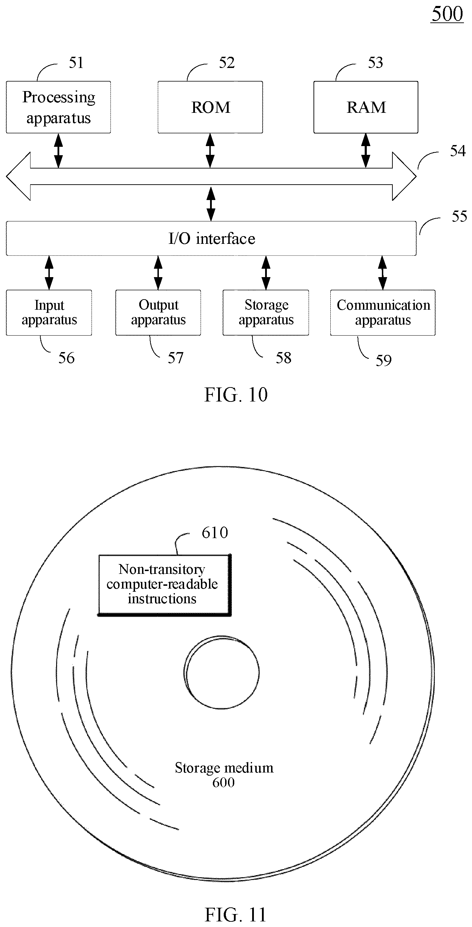

FIG. 10 is a schematic block diagram of another electronic device according to at least one embodiment of the present disclosure.

For example, as shown in FIG. 10, the electronic device 500 is, for example, suitable for implementing the data conversion method provided by embodiments of the present disclosure. It should be noted that the electronic device 500 shown in FIG. 10 is only an example, which does not impose any limitation on the function and scope of use of the embodiments of the present disclosure.

For example, as shown in FIG. 10, an electronic device 500 may include a processing apparatus (e.g., a central processing unit, a graphics processor, etc.) 51 that may execute various appropriate actions and processing according to a program stored in a Read-Only Memory (ROM) 52 or a program loaded from a storage apparatus 58 into a Random-Access Memory (RAM) 53. The RAM 53 further stores various programs and data required for operation of the electronic device 500. The processing apparatus 51, the ROM 52 and the RAM 53 are connected to each other through a bus 54. An input/output (I/O) interface 55 is also connected to the bus 54. In general, the following apparatuses may be connected to the I/O interface 55: an input apparatus 56 including, for example, a touch screen, a touch pad, a keyboard, a mouse, a camera, a microphone, an accelerometer, a gyroscope, etc.; an output apparatus 57 including, for example, a Liquid Crystal Display (LCD), a speaker, a vibrator, etc.; a storage apparatus 58 including, for example, a magnetic tape, a hard disk, etc.; and a communication apparatus 59. The communication apparatus 59 may allow the electronic device 500 to perform wireless or wired communication with other electronic device so as to exchange data.

Although FIG. 10 illustrates electronic device 500 with various apparatuses, it should be understood that it is not required to implement or have all the apparatuses shown, and electronic device 500 may alternatively be implemented or provided with more or fewer apparatuses.

It should be noted that not all of the components of the electronic device 400/500 are shown for clarity and conciseness in the present disclosure. To realize the necessary functions of the electronic device, those skilled in the art may provide, set other constituent units not shown according to specific needs, which are not limited by embodiments of the present disclosure.

Regarding the detailed explanation and technical effects of the electronic device 400/500, reference may be made to the above related description regarding the data conversion method, which is not repeated here.

FIG. 11 is a schematic diagram of a storage medium according to at least one embodiment of the present disclosure.

For example, as shown in FIG. 11, the storage medium 600 is configured to store non-transitory computer-readable instructions 610. For example, the non-transitory computer-readable instructions 610, when executed by a computer, may implement one or more steps in the data conversion method as described above.

This storage medium 600 can be applied to the data conversion apparatus 300 as shown in FIG. 8. For example, the storage medium 600 may be the memory 320 in the data conversion apparatus 300. For example, the relevant description of the storage medium 600 may refer to the corresponding description of the memory 320 in the data conversion apparatus 300 as shown in FIG. 8, and no details will be repeated here.

The following points need to be noted:

(1) In the drawings of the embodiments of the present disclosure, only the structures related to the embodiments of the present disclosure are involved, and other structures may refer to the common design(s).
(2) In case of no conflict, features in one embodiment or in different embodiments of the present disclosure may be combined.

The above are merely particular embodiments of the present disclosure but are not limitative to the scope of the present disclosure. Therefore, the scope of the present disclosure should be defined in the appended claims.

**Claims**

1. A data conversion method for converting dimensions of a first data combination, **characterized in that** the first data combination comprises at least one batch, dimensions of data to which each of the at least one batch corresponds comprises a first dimension, a second dimension, and a third dimension, and the data conversion method comprises:

   reading (S110) n elements in the first data combination according to a first-dimension direction to obtain a first processing group, wherein a first element to an n-th element in the first processing group are arranged according to the first-dimension direction, and n is a positive integer;

   performing (S120) a transpose on the first dimension and the third dimension of the first processing group to obtain a second processing group, wherein a first element to an n-th element in the second processing group are arranged in a third-dimension direction; and

   writing (S130) the first element to the n-th element in the second processing group to a first storage.

2. The data conversion method of claim 1, wherein a plurality of elements in the first data combination are stored in the first storage in a first order, the first order is a prioritized order of the third-dimension direction, a second-dimension direction, the first-dimension direction, and a batch direction.

3. The data conversion method of claim 1 or 2, further comprising: reading the first data combination a plurality of times to obtain a plurality of the first processing groups.

4. The data conversion method of any one of claims 1-3, further comprising: writing a plurality of the second processing groups to the first storage to obtain a second data combination, wherein a number of elements comprised in the second data combination is identical to a number of elements comprised in the first data combination.

5. The data conversion method of claim 4, wherein a plurality of elements in the second data combination are stored in the first storage in a second order, and the second order is a prioritized order of the first-dimension direction, the third-dimension direction, a second-dimension direction, and a batch direction.

6. The data conversion method of any one of claims 1-5, wherein the first dimension is a number of channels, the second dimension is a height, and the third dimension is a width.

7. The data conversion method of any one of claims 1-6, wherein a first dimension of each element in the first processing group is 1, a second dimension of each element in the first processing group is 1, and a third dimension of each element in the first processing group is m,

   a first dimension of each element in the second processing group is m, a second dimension of each element in the second processing group is 1, a third dimension of each element in the second processing group is 1, wherein m is a positive integer, and m = n.

8. The data conversion method of any one of claims 1-7, wherein the first processing group is written to a second storage, the second storage comprises n cache lines, and
   performing the transpose on the first dimension and the third dimension of the first processing group to obtain the second processing group, comprises:

   shift-writing (S121) the first element to the n-th element in the first processing group to a first cache line to an n-th cache line of the n cache lines in sequence to obtain a cache data group, wherein the cache data group comprises a plurality of diagonal rows; and
   reading (S122) the plurality of diagonal rows in sequence to obtain the second processing group.

9. The data conversion method of claim 8, wherein each element in the first processing group comprises n sub-elements, shift-writing the first element to the n-th element in the first processing group to a first cache line to an n-th cache line of the n cache lines in sequence, comprises:

   writing n sub-elements of the first element in the first processing group to the first cache line of the n cache lines, wherein a first sub-element to an n-th sub-element of the first element are written to a first column to an n-th column of the first cache line in sequence;
   writing n sub-elements of a k-th element in the first processing group to a k-th cache line of the n cache lines, wherein a k-th sub-element to an n-th sub-element of the k-th element are written to a first column to a (n-k+l)-th column of the k-th cache line, the first sub-element to a (k-l)-th sub-element of the k-th element are written to a (n-k+2)-th column to a n-th column of the k-th cache line, and k = 2, 3, ..., n-1; and

writing n sub-elements of the n-th element in the first processing group to the n-th cache line of the n cache line, wherein an n-th sub-element of the n-th element is written to a first column of the n-th cache line, and a first sub-element to a (n-l)-th sub-element of the n-th element are written to a second column to an n-th column of the n-th cache line.

10. The data conversion method of claim 8 or 9, wherein each element in the second processing group comprises n sub-elements,

the cache data group comprises n×n sub-elements of n rows and n columns, the plurality of diagonal rows comprises a first diagonal row to a (2n-1)-th diagonal row,
reading the plurality of diagonal rows in sequence to obtain the second processing group comprises:

reading k sub-elements in a k-th diagonal row of the plurality of diagonal rows and n-k sub-elements in an (n+k)-th diagonal row of the plurality of diagonal rows as a k-th element in the second processing group, wherein k = 1, 2, ..., n-1; and
reading n sub-elements in an n-th diagonal row of the plurality of diagonal rows as an n-th element in the second processing group.

11. The data conversion method of any one of claims 8-10, wherein the first storage is a memory, and the second storage is a buffer.

12. A data conversion apparatus (200) for converting dimensions of a first data combination, **characterized in that**

the first data combination comprises at least one batch, dimensions of data to which each of the at least one batch corresponds comprises a first dimension, a second dimension, and a third dimension, and
the data conversion apparatus (200) comprises:

a read module (210), configured to read n elements in the first data combination according to a first-dimension direction to obtain a first processing group, wherein a first element to an n-th element in the first processing group are arranged according to the first-dimension direction, and n is a positive integer;
a transpose module (220), configured to perform a transpose on the first dimension and the third dimension of the first processing group to obtain a second processing group, wherein a first element to an n-th element in the second processing group are arranged in a third-dimension direction; and
a write module (230), configured to write the first element to the n-th element in the second processing group to a first storage.

13. An electronic device (400), comprising: the data conversion apparatus (410) according to claim 12; and a data processing apparatus (420), configured to process the first data combination.

14. A data conversion apparatus (300), comprising:

a processor (310); and
a memory (320) comprising one or more computer program modules;
wherein the one or more computer program modules are stored in the memory (320) and configured to be executed by the processor (310), the one or more computer program modules are configured when executed by the processor, to implement the data conversion method according to any one of claims 1-11.

15. A storage medium (600), on which non-transitory computer-readable instructions (610) are stored, wherein the non-transitory computer-readable instructions (610), when executed by a computer, implement the data conversion method according to any one of claims 1-11.

**Patentansprüche**

1. Datenkonvertierungsverfahren zum Konvertieren von Dimensionen einer ersten Datenkombination, **dadurch ge-**

**kennzeichnet, dass** die erste Datenkombination mindestens einen Stapel umfasst, wobei Datendimensionen, denen jeder des mindestens einen Stapels entspricht, eine erste Dimension, eine zweite Dimension und eine dritte Dimension umfassen, und das Datenkonvertierungsverfahren Folgendes umfasst:

Lesen (S110) von n Elementen in der ersten Datenkombination gemäß einer Richtung der ersten Dimension, um eine erste Verarbeitungsgruppe zu erhalten, wobei ein erstes bis ein n-tes Element in der ersten Verarbeitungsgruppe gemäß der Richtung der ersten Dimension angeordnet sind und n eine positive ganze Zahl ist;
Durchführen (S120) einer Transponierung an der ersten Dimension und der dritten Dimension der ersten Verarbeitungsgruppe, um eine zweite Verarbeitungsgruppe zu erhalten, wobei ein erstes bis ein n-tes Element in der zweiten Verarbeitungsgruppe in einer Richtung der dritten Dimension angeordnet sind; und
Schreiben (S130) vom ersten Element bis n-ten Element in der zweiten Verarbeitungsgruppe in einen ersten Speicher.

2. Datenkonvertierungsverfahren nach Anspruch 1, wobei eine Vielzahl von Elementen in der ersten Datenkombination in einer ersten Reihenfolge im ersten Speicher gespeichert wird, wobei die erste Reihenfolge eine priorisierte Reihenfolge der Richtung der dritten Dimension, einer Richtung der zweiten Dimension, der Richtung der ersten Dimension und einer Stapelrichtung ist.

3. Datenkonvertierungsverfahren nach Anspruch 1 oder 2, das weiter Folgendes umfasst: vielfaches Lesen der ersten Datenkombination, um eine Vielzahl der ersten Verarbeitungsgruppen zu erhalten.

4. Datenkonvertierungsverfahren nach einem der Ansprüche 1-3, das weiter Folgendes umfasst: Schreiben einer Vielzahl der zweiten Verarbeitungsgruppen in den ersten Speicher, um eine zweite Datenkombination zu erhalten, wobei eine Anzahl von Elementen, die in der zweiten Datenkombination umfasst sind, mit einer Anzahl von Elementen identisch ist, die in der ersten Datenkombination umfasst sind.

5. Datenkonvertierungsverfahren nach Anspruch 4, wobei eine Vielzahl von Elementen in der zweiten Datenkombination in einer zweiten Reihenfolge im ersten Speicher gespeichert wird und die zweite Reihenfolge eine priorisierte Reihenfolge der Richtung der ersten Dimension, der Richtung der dritten Dimension, einer Richtung der zweiten Dimension und einer Stapelrichtung ist.

6. Datenkonvertierungsverfahren nach einem der Ansprüche 1-5, wobei die erste Dimension eine Anzahl von Kanälen ist, die zweite Dimension eine Höhe ist und die dritte Dimension eine Breite ist.

7. Datenkonvertierungsverfahren nach einem der Ansprüche 1-6, wobei eine erste Dimension jedes Elements in der ersten Verarbeitungsgruppe 1 ist, eine zweite Dimension jedes Elements in der ersten Verarbeitungsgruppe 1 ist und eine dritte Dimension jedes Elements in der ersten Verarbeitungsgruppe m ist,

eine erste Dimension jedes Elements in der zweiten Verarbeitungsgruppe m ist, eine zweite Dimension jedes Elements in der zweiten Verarbeitungsgruppe 1 ist und eine dritte Dimension jedes Elements in der zweiten Verarbeitungsgruppe 1 ist,
wobei m eine positive ganze Zahl ist und m = n.

8. Datenkonvertierungsverfahren nach einem der Ansprüche 1-7, wobei die erste Verarbeitungsgruppe in einen zweiten Speicher geschrieben wird, der zweite Speicher n Cache-Lines umfasst und
Durchführen der Transponierung an der ersten Dimension und der dritten Dimension der ersten Verarbeitungsgruppe, um die zweite Verarbeitungsgruppe zu erhalten, Folgendes umfasst:

Verschiebeschreiben (S121) vom ersten Element bis n-ten Element in der ersten Verarbeitungsgruppe in eine erste Cache-Line bis n-te Cache-Line der n Cache-Lines der Reihe nach, um eine Cache-Datengruppe zu erhalten, wobei die Cache-Datengruppe eine Vielzahl von diagonalen Zeilen umfasst; und
Lesen (S122) der Vielzahl von diagonalen Zeilen der Reihe nach, um die zweite Verarbeitungsgruppe zu erhalten.

9. Datenkonvertierungsverfahren nach Anspruch 8, wobei jedes Element in der ersten Verarbeitungsgruppe n Unterelemente umfasst,
Verschiebeschreiben vom ersten Element bis n-ten Element in der ersten Verarbeitungsgruppe in eine erste Cache-Line bis n-te Cache-Line der n Cache-Lines der Reihe nach, Folgendes umfasst:

Schreiben von n Unterelementen des ersten Elements in der ersten Verarbeitungsgruppe in die erste Cache-Line der n Cache-Lines, wobei ein erstes Unterelement bis n-tes Unterelement des ersten Elements in eine erste Spalte bis n-te Spalte der ersten Cache-Line geschrieben werden;

Schreiben von n Unterelementen eines k-ten Elements in der ersten Verarbeitungsgruppe in eine k-te Cache-Line der n Cache-Lines, wobei ein k-tes Unterelement bis n-tes Unterelement des k-ten Elements in eine erste Spalte bis (n-k+1)-te Spalte der k-ten Cache-Line geschrieben werden, das erste Unterelement bis ein (k-1)-tes Unterelement des k-ten Elements in eine (n-k+2)-te Spalte bis n-te Spalte der k-ten Cache-Line geschrieben werden und k = 2, 3, ..., n-1; und

Schreiben von n Unterelementen des n-ten Elements in der ersten Verarbeitungsgruppe in die n-te Cache-Line der n Cache-Lines, wobei ein n-tes Unterelement des n-ten Elements in eine erste Spalte der n-ten Cache-Line geschrieben wird und ein erstes Unterelement bis (n-1)-tes Unterelement des n-ten Elements in eine zweite Spalte bis n-te Spalte der n-ten Cache-Line geschrieben werden.

10. Datenkonvertierungsverfahren nach Anspruch 8 oder 9, wobei jedes Element in der zweiten Verarbeitungsgruppe n Unterelemente umfasst,

die Cache-Datengruppe n×n Unterelemente von n Zeilen und n Spalten umfasst, die Vielzahl von diagonalen Zeilen eine erste diagonale Zeile bis (2n-1)-te diagonale Zeile umfasst,

Lesen der Vielzahl von diagonalen Zeilen der Reihe nach, um die zweite Verarbeitungsgruppe zu erhalten, Folgendes umfasst:

Lesen von k Unterelementen in einer k-ten diagonalen Zeile der Vielzahl von diagonalen Zeilen und n-k Unterelementen in einer (n+k)-ten diagonalen Zeile der Vielzahl von diagonalen Zeilen als ein k-tes Element in der zweiten Verarbeitungsgruppe, wobei k = 1,2, ..., n-1; und

Lesen von n Unterelementen in einer n-ten diagonalen Zeile der Vielzahl von diagonalen Zeilen als ein n-tes Element in der zweiten Verarbeitungsgruppe.

11. Datenkonvertierungsverfahren nach einem der Ansprüche 8-10, wobei der erste Speicher ein Arbeitsspeicher ist und der zweite Speicher ein Pufferspeicher ist.

12. Datenkonvertierungseinrichtung (200) zum Konvertieren von Dimensionen einer ersten Datenkombination, **dadurch gekennzeichnet, dass** die erste Datenkombination mindestens einen Stapel umfasst, Datendimensionen, denen jeder des mindestens einen Stapels entspricht, eine erste Dimension, eine zweite Dimension und eine dritte Dimension umfassen, und

die Datenkonvertierungseinrichtung (200) Folgendes umfasst:

ein Lesemodul (210), das dazu konfiguriert ist, n Elemente in der ersten Datenkombination gemäß einer Richtung der ersten Dimension zu lesen, um eine erste Verarbeitungsgruppe zu erhalten, wobei ein erstes bis ein n-tes Element in der ersten Verarbeitungsgruppe gemäß der Richtung der ersten Dimension angeordnet sind und n eine positive ganze Zahl ist;

ein Transponierungsmodul (220), das dazu konfiguriert ist, eine Transponierung der ersten Dimension und der dritten Dimension der ersten Verarbeitungsgruppe durchzuführen, um eine zweite Verarbeitungsgruppe zu erhalten, wobei ein erstes bis n-tes Element in der zweiten Verarbeitungsgruppe in einer Richtung der dritten Dimension angeordnet sind; und

ein Schreibmodul (230), das dazu konfiguriert ist, das erste Element bis n-te Element in der zweiten Verarbeitungsgruppe in einen ersten Speicher zu schreiben.

13. Elektronische Vorrichtung (400), umfassend: die Datenkonvertierungseinrichtung (410) nach Anspruch 12; und eine Datenverarbeitungseinrichtung (420), die dazu konfiguriert ist, die erste Datenkombination zu verarbeiten.

14. Datenumwandlungseinrichtung (300), umfassend:

einen Prozessor (310); und

einen Speicher (320), der ein oder mehrere Computerprogrammmodule umfasst;

wobei das eine oder die mehreren Computerprogrammmodule im Speicher (320) gespeichert sind und dazu konfiguriert sind, durch den Prozessor (310) ausgeführt zu werden, wobei das eine oder die mehreren Computerprogrammmodule dazu konfiguriert sind, wenn sie durch den Prozessor ausgeführt werden, das Datenkonvertierungsverfahren nach einem der Ansprüche 1-11 zu implementieren.

**15.** Speichermedium (600), auf dem nichtflüchtige, computerlesbare Anweisungen (610) gespeichert sind, wobei die nichtflüchtigen, computerlesbaren Anweisungen (610), wenn sie von einem Computer ausgeführt werden, das Datenumwandlungsverfahren nach einem der Ansprüche 1-11 implementieren.

## Revendications

**1.** Procédé de conversion de données pour convertir des dimensions d'une première combinaison de données, **caractérisé en ce que** la première combinaison de données comprend au moins un lot, les dimensions de données auxquelles correspond chacun du au moins un lot comprend une première dimension, une deuxième dimension et une troisième dimension, et le procédé de conversion de données comprend :

la lecture de (S110) n éléments dans la première combinaison de données selon une direction de première dimension pour obtenir un premier groupe de traitement, dans lequel un premier élément jusqu'à un n-ième élément dans le premier groupe de traitement sont agencés selon la direction de première dimension, et n est un entier positif ;
la réalisation (S120) d'une transposition sur la première dimension et la troisième dimension du premier groupe de traitement pour obtenir un second groupe de traitement, dans lequel un premier élément à un n-ième élément dans le second groupe de traitement sont agencés dans une direction de troisième dimension ; et
l'écriture (S130) du premier élément au n-ième élément dans le second groupe de traitement dans un premier stockage.

**2.** Procédé de conversion de données selon la revendication 1, dans lequel une pluralité d'éléments dans la première combinaison de données sont stockés dans le premier stockage dans un premier ordre, le premier ordre étant un ordre priorisé de la direction de troisième dimension, d'une direction de deuxième dimension, de la direction de première dimension et d'une direction de lot.

**3.** Procédé de conversion de données selon la revendication 1 ou 2, comprenant en outre : la lecture de la première combinaison de données une pluralité de fois pour obtenir une pluralité des premiers groupes de traitement.

**4.** Procédé de conversion de données selon l'une quelconque des revendications 1-3, comprenant : l'écriture d'une pluralité des seconds groupes de traitement dans le premier stockage pour obtenir une seconde combinaison de données,
dans lequel un certain nombre d'éléments compris dans la seconde combinaison de données est identique à un certain nombre d'éléments compris dans la première combinaison de données.

**5.** Procédé de conversion de données selon la revendication 4, dans lequel une pluralité d'éléments dans la seconde combinaison de données sont stockés dans le premier stockage dans un second ordre, et le second ordre est un ordre priorisé de la direction de première dimension, de la direction de troisième dimension, d'une direction de deuxième dimension et d'une direction de lot.

**6.** Procédé de conversion de données selon l'une quelconque des revendications 1-5, dans lequel la première dimension est un nombre de canaux, la deuxième dimension est une hauteur et la troisième dimension est une largeur.

**7.** Procédé de conversion de données selon l'une quelconque des revendications 1-6, dans lequel une première dimension de chaque élément du premier groupe de traitement est 1, une deuxième dimension de chaque élément du premier groupe de traitement est 1, et une troisième dimension de chaque élément du premier groupe de traitement est m.

une première dimension de chaque élément du second groupe de traitement est m, une deuxième dimension de chaque élément du second groupe de traitement est 1, une troisième dimension de chaque élément du second groupe de traitement est 1,
dans lequel m est un entier positif, et m = n.

**8.** Procédé de conversion de données selon l'une quelconque des revendications 1-7, dans lequel le premier groupe de traitement est écrit dans un second stockage, le second stockage comprend n lignes de cache, et
la réalisation de la transposition sur la première dimension et la troisième dimension du premier groupe de traitement pour obtenir le second groupe de traitement, comprend :

l'écriture par décalage (S121) du premier élément au n-ième élément du premier groupe de traitement d'une première ligne de cache à une n-ième ligne de cache des n lignes de cache en séquence pour obtenir un groupe de données de cache, dans lequel le groupe de données de cache comprend une pluralité de rangées diagonales ; et
la lecture (S122) de la pluralité de rangées diagonales en séquence pour obtenir le second groupe de traitement.

9. Procédé de conversion de données selon la revendication 8, dans lequel chaque élément du premier groupe de traitement comprend n sous-éléments,
l'écriture par décalage du premier élément au n-ième élément du premier groupe de traitement d'une première ligne de cache à une n-ième ligne de cache des n lignes de cache en séquence, comprend :

l'écriture de n sous-éléments du premier élément dans le premier groupe de traitement sur la première ligne de cache des n lignes de cache, dans lequel un premier sous-élément à un n-ième sous-élément du premier élément sont écrits dans une première colonne à une n-ième colonne de la première ligne de cache en séquence ;
l'écriture de n sous-éléments d'un k-ième élément du premier groupe de traitement sur une k-ième ligne de cache des n lignes de cache, dans lequel un k-ième sous-élément à un n-ième sous-élément du k-ième élément sont écrits dans une première colonne à une (n-k+1)-ième colonne de la k-ième ligne de cache, le premier sous-élément jusqu'à un (k-1)-ième sous-élément du k-ième élément sont écrits dans une (n-k+2)-ième colonne à une n-ième colonne de la k-ième ligne de cache, et k = 2, 3, ..., n-1 ; et
l'écriture de n sous-éléments du n-ième élément dans le premier groupe de traitement dans la n-ième ligne de cache de la n-ième ligne de cache, dans lequel un n-ième sous-élément du n-ième élément est écrit dans une première colonne de la n-ième ligne de cache, et un premier sous-élément d'un (n-1)-ième sous-élément du n-ième élément sont écrits dans une seconde colonne d'une n-ième colonne de la n-ième ligne de cache.

10. Procédé de conversion de données selon la revendication 8 ou 9, dans lequel chaque élément du second groupe de traitement comprend n sous-éléments,

le groupe de données de cache comprend $n \times n$ sous-éléments de n rangées et n colonnes, la pluralité de rangées diagonales comprend une première rangée diagonale à une (2n-1)-ième rangée diagonale,
la lecture de la pluralité de rangées diagonales en séquence pour obtenir le second groupe de traitement comprend :

la lecture de k sous-éléments dans une k-ième rangée diagonale de la pluralité de rangées diagonales et de n-k sous-éléments dans une (n+k)-ième rangée diagonale de la pluralité de rangées diagonales en tant que k-ième élément dans le second groupe de traitement, dans lequel k = 1,2, ..., n-1 ; et
la lecture de n sous-éléments dans une n-ième rangée diagonale de la pluralité de rangées diagonales comme un n-ième élément dans le second groupe de traitement.

11. Procédé de conversion de données selon l'une quelconque des revendications 8-10, dans lequel le premier stockage est une mémoire et le second stockage est un tampon.

12. Appareil de conversion de données (200) pour convertir les dimensions d'une première combinaison de données, **caractérisé en ce que** la première combinaison de données comprend au moins un lot, les dimensions de données auxquelles correspond chacun des au moins un lot comprennent une première dimension, une deuxième dimension et une troisième dimension, et
l'appareil de conversion de données (200) comprend :

un module de lecture (210), configuré pour lire n éléments dans la première combinaison de données selon une direction de première dimension pour obtenir un premier groupe de traitement, dans lequel un premier élément jusqu'à un n-ième élément dans le premier groupe de traitement sont agencés selon la direction de première dimension, et n est un entier positif ;
un module de transposition (220), configuré pour effectuer une transposition sur la première dimension et la troisième dimension du premier groupe de traitement pour obtenir un second groupe de traitement, dans lequel un premier élément à un n-ième élément dans le second groupe de traitement sont agencés dans une direction de troisième dimension ; et
un module d'écriture (230), configuré pour écrire le premier élément au n-ième élément dans le second groupe de traitement dans un premier stockage.

13. Dispositif électronique (400), comprenant : l'appareil de conversion de données (410) selon la revendication 12 ; et un appareil de traitement de données (420), configuré pour traiter la première combinaison de données.

14. Appareil de conversion de données (300), comprenant :

un processeur (310) ; et
une mémoire (320) comprenant un ou plusieurs modules de programme informatique ;
dans lequel les un ou plusieurs modules de programme informatique sont stockés dans la mémoire (320) et configurés pour être exécutés par le processeur (310), les un ou plusieurs modules de programme informatique sont configurés, lorsqu'ils sont exécutés par le processeur, pour mettre en œuvre le procédé de conversion de données selon l'une quelconque des revendications 1-11.

15. Support de stockage (600), sur lequel sont stockées des instructions non transitoires lisibles par ordinateur (610), dans lequel, les instructions non transitoires lisibles par ordinateur (610), lorsqu'elles sont exécutées par un ordinateur, exécutent le procédé de conversion de données selon l'une quelconque des revendications 1-11.

FIG. 1

FIG. 2

S110 Reading n elements in the first data combination according to a first-dimension direction to obtain a first processing group

S120 Performing a transpose on the first dimension and the third dimension of the first processing group to obtain a second processing group

S130 Writing the first element to the n-th element in the second processing group to a first storage

FIG. 3

FIG. 4

S121

Shift-writing the first element to the n-th element in the first processing group into a first cache line to an n-th cache line of the n cache lines in sequence to obtain a cache data group

S122

Reading the plurality of diagonal rows in sequence to obtain the second processing group

FIG. 5

First storage

Read

Write

First element in the first processing group

14th element in the first processing group

Write

Read

Second storage

Cyclic shift-writing

Skew reading

FIG. 6

200

Read module 210

Transpose module 220

Write module 230

FIG. 7

300

Processor 310

Memory 320

FIG. 8

400

Data conversion
apparatus 410

Data processing
apparatus 420

FIG. 9

500

```
   51              52              53
Processing        ROM             RAM
apparatus
```

54

55

I/O interface

```
Input        Output       Storage      Communication
apparatus    apparatus    apparatus    apparatus
   56           57           58            59
```

FIG. 10

610

Non-transitory
computer-readable
instructions

Storage medium
600

FIG. 11

# EP 4 462 263 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310514473